# EUROPEAN PATENT APPLICATION

(11) **EP 3 002 095 A1**
(43) Date of publication of application: **06.04.2016**
(21) Application number: 15184868.6
(22) Date of filing: 11.09.2015
(51) Int. Cl.: B26D 3/18, B26D 5/10, B26D 7/06, B26D 7/00

(54) **FOOD CHOPPER WITH SLIDE-IN TRAY**

(30) Priority: 11.09.2014 US 201462048944 P
(71) Applicant: Progressive International Corporation, Kent, WA 98032-2358 (US)
(72) Inventor: COTTER, Jennifer K., Seattle, WA Washington 98103 (US)
(74) Representative: Carter, Stephen John

(57) **Abstract**

A food chopper includes a lid (20) pivotally moveable with respect to a blade tray (50), in which the lid (20) includes a set of projections (71;72) configured to extend through openings in a grid of blades (81;82) carried on the blade tray (50). A reservoir (40) is positioned beneath the grid of blades (81;82) to catch chopped food items, and the reservoir (40) is removably attached to the blade tray (50).

## Description

### PRIORITY CLAIM

This application claims the benefit of prior US provisional application number 62/048,944, filed September 11, 2014, the contents of which are incorporated by reference.

### FIELD OF THE INVENTION

This invention relates generally to food preparation devices, including devices for chopping or slicing onions, mushrooms, and the like.

### BACKGROUND OF THE INVENTION

In preparing food, it is often desirable to prepare onions by slicing them in strips or chopping them into small pieces. Most commonly, this is done by using a knife. There are other specially-designed devices for chopping foods, including some devices having a lid having a grid of projections which pivots downward to push the onion or other food item through a grid of blades. The current devices lack certain features that can sometimes make them less desirable to use, or which can improve their functionality.

### SUMMARY OF THE INVENTION

A food chopper includes a lid pivotally moveable with respect to a blade tray, in which the lid includes a set of projections configured to extend through openings in a grid of blades carried on the blade tray. A reservoir is positioned beneath the grid of blades to catch chopped food items, and in the preferred version of the invention the reservoir is removably attached to the blade tray.

In accordance with a preferred example of the invention, the reservoir is slideably attached to the blade tray, most preferably it can slide outward and away from the blade tray along a path that is parallel to a plane defined by the blade tray.

In some examples of the invention, the blade tray includes a frame which reinforces the perimeter of the blade tray.

In some versions of the invention, the blade tray is supported by a stand which may be formed as legs which are mounted to the reinforcing frame. The legs may terminate in feet configured to rest on a countertop.

In one preferred example, the blade tray includes a ledge for supporting the reservoir, and the ledge may be formed from one or more wires extending from the blade tray, the wires engaging a peripheral shoulder or flange formed on the reservoir.

The reservoir may include one or more handles to facilitate removal of the reservoir from the blade tray.

In some versions, the blade tray may include multiple grids of blades and the lid may include corresponding multiple grids of projections. The chopper may optionally include a pick and storage for the pick on the blade tray.

### BRIEF DESCRIPTION OF THE DRAWINGS

Preferred and alternative examples of the present invention are described in detail below with reference to the following drawings:

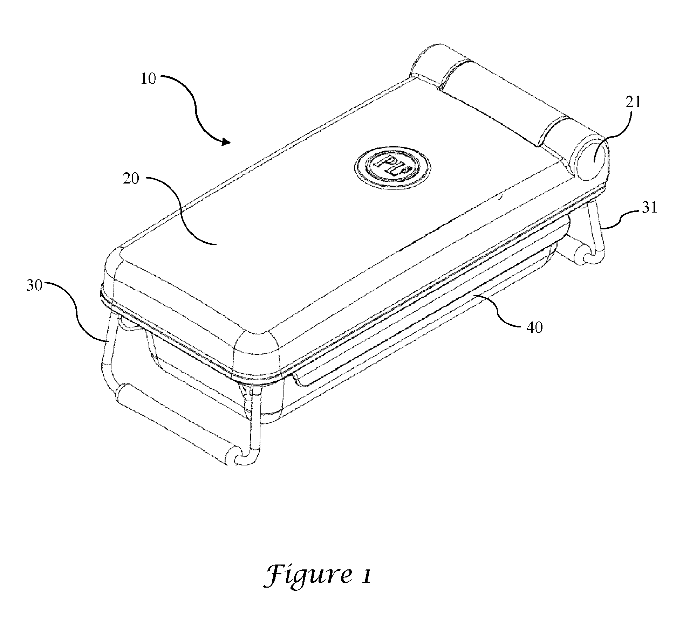

Figure 1 is a top-left perspective view of a preferred chopper with slide-in tray.

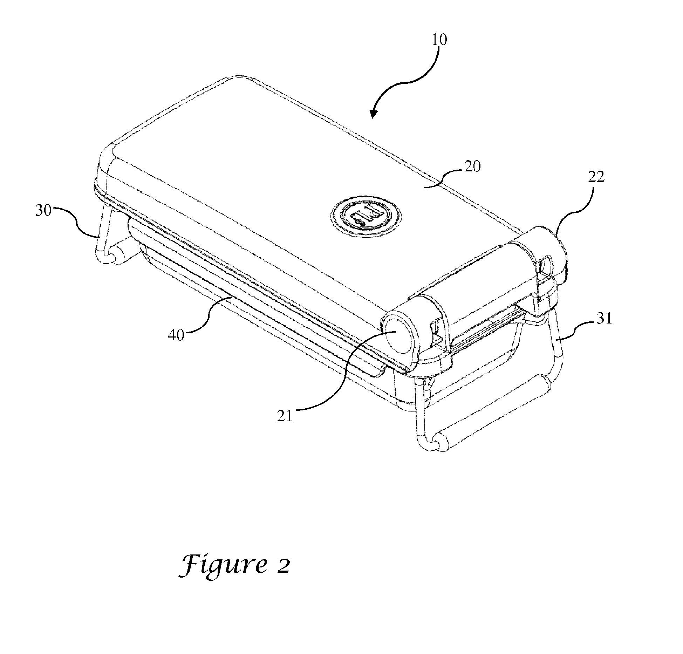

Figure 2 is a top-right perspective view of a preferred chopper with slide-in tray.

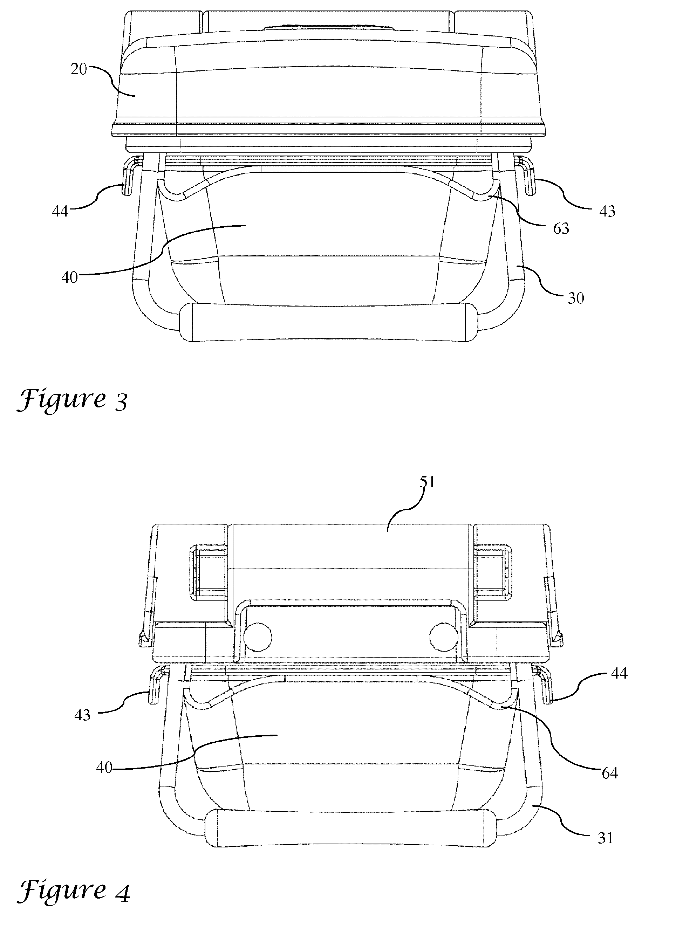

Figure 3 is a left side plan view of a preferred chopper with slide-in tray.
Figure 4 is a right side plan view of a preferred chopper with slide-in tray.
Figure 5 is a front plan view of a preferred chopper with slide-in tray.
Figure 6 is a bottom plan view of a preferred chopper with slide-in tray.
Figure 7 is a front plan view of a preferred chopper with slide-in tray, shown with the slide-in tray removed.
Figure 8 is a bottom plan view of a preferred chopper with slide-in tray, shown with the slide-in tray removed.
Figure 9 is a top-left perspective view of a preferred chopper with slide-in tray, shown partially disassembled and with the slid-in tray removed.
Figure 10 is an exploded view of a preferred chopper with slide-in tray.
Figure 11 is a bottom perspective view of a preferred chopper with slide-in tray, shown with the slide-in tray partially extended.

### DETAILED DESCRIPTION OF THE PREFERRED EMBODIMENT

A preferred food chopper, suitable for cutting or slicing onions or other food items, is illustrated in the accompanying figures. In the embodiment as illustrated, the food chopper includes a lid 20, a blade tray 50, and a food reservoir 40. The blade tray and the lid are pivotally connected to one another, with the blade tray supporting an upper rim 41, 42 of the reservoir which is suspended below the blade tray.

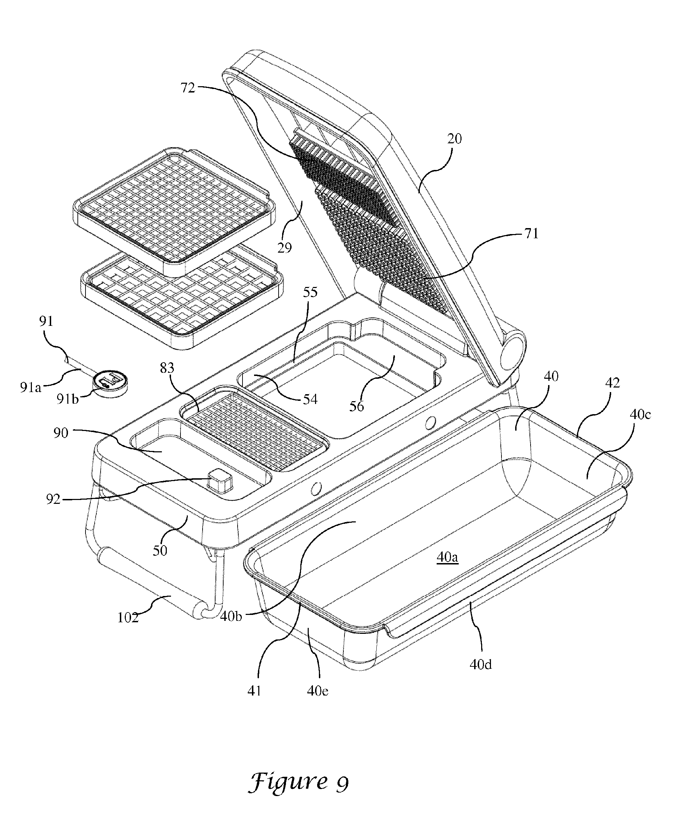

The lid 20 is generally rectangular in shape, having squared corners at a first end that is pivotally connected to the blade tray, with rounded corners at a second end opposite the first end. A downward-extending flange 29 surrounds the peripheral edge of the lid (see Figure 9), and is sized and shaped to snugly receive an outer surface of the blade tray 50 within the flange when the lid is rotated downward against the blade tray.

The lid further includes a grid of projections on the inner surface, extending downward in the same direction as the flange. In a preferred version of the invention the lid 20 includes two separate grids of projections 71, 72, each spaced apart from one another. The projections may take on any size or shape, as desired, and are ideally shaped to thoroughly push the food through the blades within the blade tray.

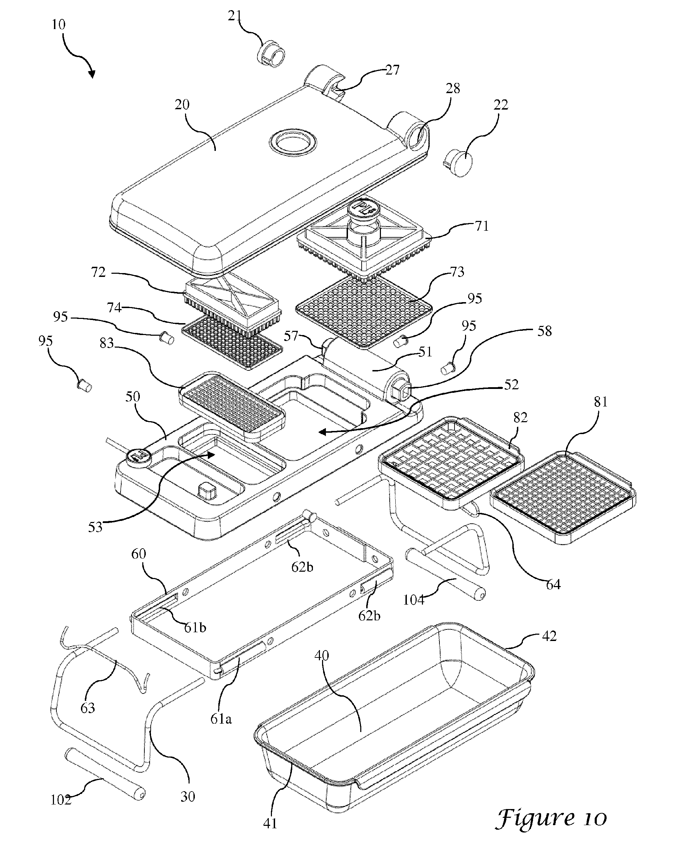

As discussed further below, the blade tray 50 includes a network of blades configured at right angles and forming generally square openings. In the preferred version as illustrated in Figure 10, two separate openings 52, 53 for blade grids are provided, spaced apart from one another. In the illustrated example, a large generally square blade grid 81 is removably seated in a first opening 52 in the blade tray 50 while a somewhat smaller rectangular grid 83 is seated in a second opening 53 the blade tray 50.

In some versions, as described above, the blade grids are removably attached to the frame to allow for selection and replacement of blades having desired spacing. For example, two different grids of blades 81, 82 may be selectively used in a first one of the openings 52 formed in the tray 50. One of the two grids of blades 81 includes a larger number of blades spaced more closely together within a frame while the other of the two grids of blades 82 includes fewer blades spaced farther apart.

As best seen in Figure 9, the blade grid openings 52, 53 in the tray preferably include vertical sidewalls, *e.g.,* 54, and a lower horizontal shelf 55 forming a seat to support the blade frames. One or both of the blade locations 52, 53 may also include a recessed region 56 providing a gap between a sidewall of a blade grid opening and an outer perimeter of a blade frame on the tray 50 in order to allow a user to more readily grasp a blade frame for removal from the tray. Likewise, the blade frames may include a small extension or flange serving as a handle for removal of the blade frame and alignment of the frame within the tray.

The projections 71, 72 on the lid are sized and located within the lid such that when the lid is closed one or more projections fits within each of the blade openings. Where two separate groupings of blades and projections are formed, each separate set of projections 71, 72 is configured to extend through a separate grid of blades e.g., 82, 83. Though shown as intersecting blades, in some versions the network of blades may have only parallel blades thereby forming elongated openings, or blades forming wedge shapes.

In one example of the invention, as best seen in Figure 9, the tray 50 includes a small cavity 90 configured to retain and store a small tool such as a cleaning pick 91. The cleaning pick includes a handle 91b and an elongated tine 91a shaped to fit in the openings between blades in the blade frames in order to push through any remaining stuck food items. The cavity may further include a post 92 sized and shaped to allow the handle of the pick to be snugly frictionally retained between the post and one of the sidewalls of the cavity in order to better retain the pick for storage.

As seen for example in Figure 9, the food reservoir 40 is formed in substantially the same shape as the lid when viewed from the top. Thus, in the preferred form, it has a generally rectangular shape with rounded corners as viewed from the top. The reservoir includes a bottom 40a and four sidewalls 40b, 40c, 40d, 40e to form an interior rectangular cubic cavity having an open top. The depth of the reservoir may vary, and is preferably sized to hold a typical expected volume of onions, mushrooms, or other food ingredients that may be used in cooking.

The upper rim of the reservoir includes a pair of diametrically opposed flanges 41, 42 used to support the reservoir beneath the frame. In the version as illustrated, the two flanges extend laterally outward from the upper rim of the reservoir short distance. The two flanges interact with complementary support surfaces provided on the blade tray. The upper rim of the reservoir preferably further includes an opposing pair of handles 43, 44 which in the illustrated version are formed as elongated flanges that extend downward and laterally away from portions of the rim. Most preferably, the support flanges 41, 42 are positioned on a first pair of opposing sides of the reservoir while the handles 43, 44 are positioned on the sides of the reservoir between the support flanges. In the illustrated example, the reservoir is rectangular and the handles extend substantially along the entire length of the long side of the reservoir. In other versions the reservoir may be shaped differently and the handles need not extend along the entire side.

The tray 50 preferably includes an interior support structure 60, as best seen in Figure 10. In one version, the interior support structure is formed from metal in order to provide additional strength while the outer tray 50 is formed from a plastic material. In the illustrated example, the tray support structure is formed as a rectangular frame sized and configured to abut an inner portion of the blade tray 50.

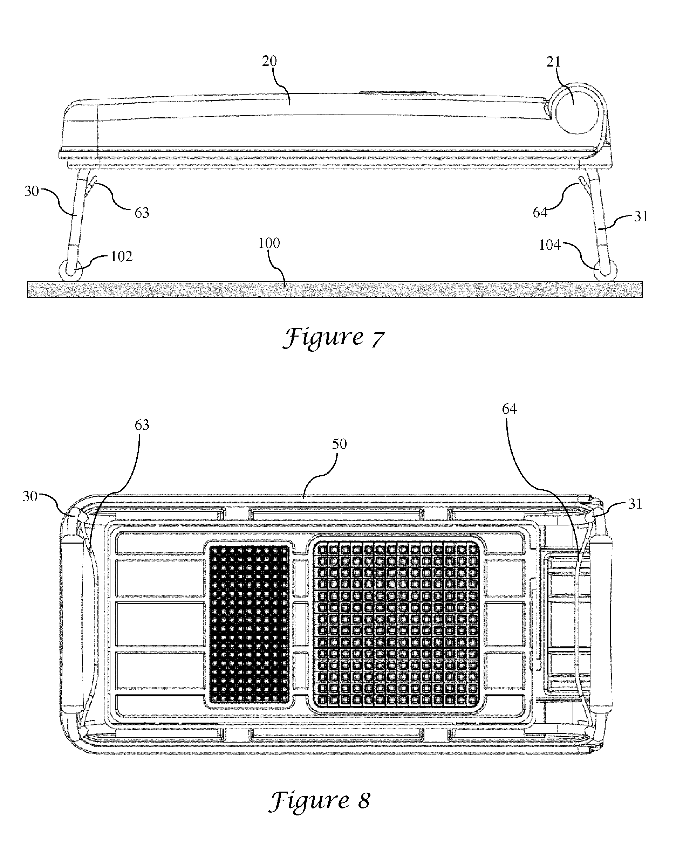

As seen in Figure 7, the blade tray is supported by a stand such that it remains above a horizontal surface such as a countertop 100 even when the reservoir is removed. In the preferred version, the stand is formed as one or more legs at each end of the blade tray, such as legs 30, 31, which terminate in feet 102, 104 that rest on a countertop 100. The inner support structure includes several attachment points 61a, 61b, 62a, 62b for attaching legs to the inner support structure. In the illustrated example, the device includes a front leg 30 and a rear leg 31. Each of the front and rear legs are formed from a shaped wire having sufficient rigidity to support the reservoir and blade tray during use. The two ends of the wire forming the front leg 30 are received in the attachment points 61a, 61b, which are configured as sleeves that receive and frictionally retain the wire ends forming the leg 30. The rear leg 31 is formed in a similar fashion and attached to two additional attachment points 62a, 62b located at the rear portion of the inner support structure 60. As illustrated, the sleeves may not entirely surround the wires forming the legs, but rather may be formed as semicircular sleeves that only partially surround the wires.

The inner support structure 60 is attached to the tray 50 using a series of rivets, bolts, or other fasteners 95 spaced about the perimeter of the frame.

In other versions, the tray may be formed as a single unitary component rather than including a separate inner support structure and outer tray structure. Likewise, in other versions the legs may be integrally formed with the inner or outer support structure, may be attached to the outer tray member, or may be attached in another fashion. In yet other versions, the legs may be excluded and instead the upper frame member is supported by the lower reservoir.

A pair of tray supports 63, 64 is attached to a lower surface of the blade tray in order to support the lower reservoir and suspend it from the blade tray. In general the tray supports are substantially horizontally-extending surfaces that support the reservoir, and they may extend from the tray, the inner support structure, or the legs. In the preferred example, the tray supports are configured as bent wires attached to and extending downward from the tray, and curving along a path that includes a horizontal expanse between opposing sides of the blade tray. In this manner, the wire tray supports form surfaces that are spaced apart from one another in order to enable the flanges 41, 42 on the reservoir 40 to rest on top of the supports. The supports are also preferably positioned at a height beneath the blade tray such that the rim of the reservoir is frictionally retained in between the supports and the tray to a degree that the reservoir will not readily slip out of place under its own weight, but a user may readily slide the reservoir out of position if desired.

The blade tray includes a boss 57, 58 provided at each of the two opposing sides of the rearward end of the blade tray. The bosses are configured to be received within a pair of bores 27, 28 at opposite sides of the rearward ends of the lid, forming the pivotal connection between the lid and the blade tray. A pair of endcaps 21, 22 enclose the bores. Accordingly, the lid is able to rotate about the pivotal connection from an open position that is preferably at least about 90 degrees with respect to the blade tray to a closed position resting adjacent and substantially flush with the blade tray.

In some embodiments of the invention, the reservoir also includes volumetric measurements on an inner or outer surface.

The exterior surface of the blade tray 50 is preferably formed in the same shape as the lid 20, such that in the preferred embodiment it comprises a rectangular shape with rounded corners. The outer surface of the tray is preferably slightly smaller than the interior width of the vertical sidewalls of the lid so that the blade tray is received within a portion of the lid when the lid is rotated downward against the tray.

The blade tray 50 includes a flat upper surface that transitions to a generally vertical peripheral wall. The grids of blades are preferably positioned such that the sharpened top edge of the blades is within, or substantially close to, the plane defining the upper surface. The wall peripheral wall of the blade tray is sized and configured such that the wall is substantially vertically above the outer side walls of the reservoir, so that food items dropping through the grid of blades are received and retained within the reservoir.

Each of the lid, tray, and reservoir is preferably formed from plastic, except for the blades, support structure, and legs as noted above. In a preferred form, at least the reservoir is formed from clear plastic to enable the user to see the volume of food inside.

In use, the user places an onion (or other food item) atop either of the grids of blades while the lid is pivoted upward to an open position. By pressing against the lid, causing pivotal and downward rotation of the lid, the grid of projections is pressed against the onion. In turn, the onion is pressed against the grid of blades, urging it through the blade openings and producing chopped onion sections having a cross-sectional shape that is the same as the blade openings. Once the lid approaches the blade grid, the projections press through the grid to clear any remaining food from the grid.

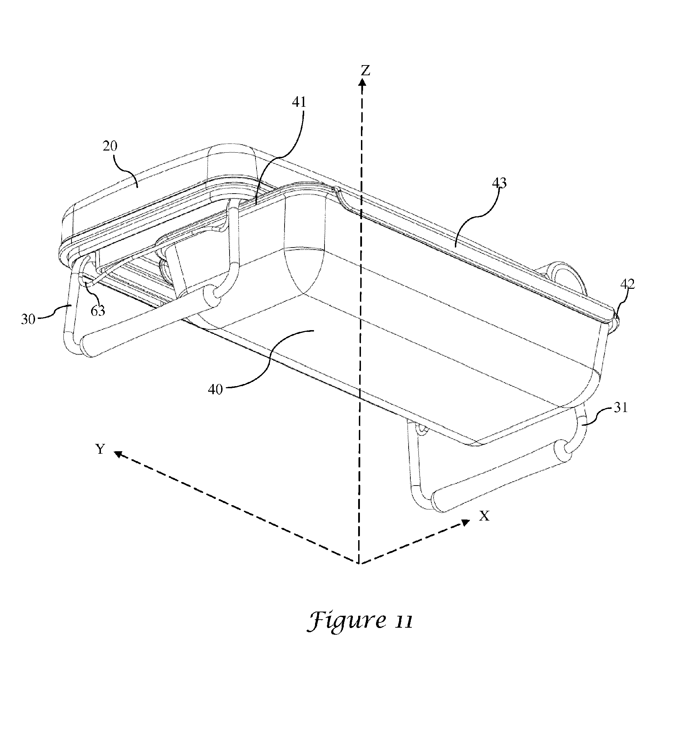

When the reservoir is full, or the chopping is completed, the reservoir can be slid outward horizontally. For example, as shown in Figure 11, the reservoir may be slid outwardly, and is illustrated in a partially extended position. In the illustrated example, the blade tray forms an upper rim that lies in a plane which is parallel to a plane defined by the blade tray. Accordingly, the reservoir also slides outwardly from the blade tray along a path that is parallel to the plane of the blade tray. As shown, a plane XY is illustrated, in which the plane XY is parallel to the plane defined by the blade tray. A vertical axis Z extends perpendicularly to the plane XY defined by the blade tray. The reservoir 40 is slideably removable from the blade tray in a direction transverse to the vertical axis Z, and most preferably in a direction parallel to the plane XY.

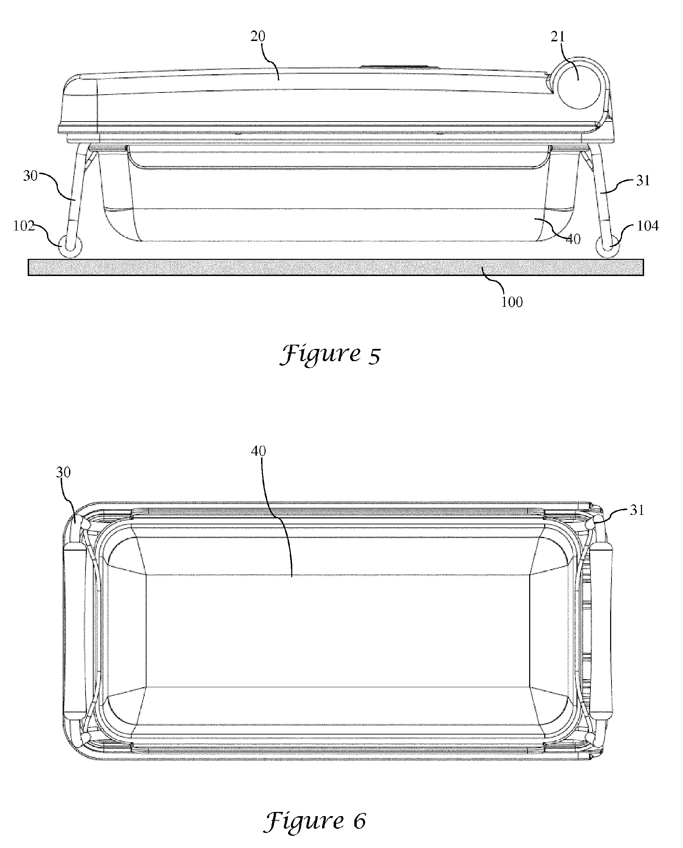

The legs 30, 31 forming the stand that support the blade tray each terminate in a foot 102, 104. Most preferably, the reservoir is suspended by the blade tray such that when the blade tray is attached to the reservoir, the reservoir is positioned above a countertop or similar horizontal surface 100, such as seen in Figure 5.

If desired, the reservoir may be slid away from and fully removed from the tray, for example as shown in the disassembled view of Figure 9. The chopped onion or other food may then be readily removed from the reservoir. The entire device can also be easily cleaned by separating the tray from the reservoir and, if desired, also removing the lid.

A cleaning grid 73, 74 is provided in some versions of the invention. The cleaning grid is formed in a generally planar shape having a first grid 73 and a second grid 74, each of the first and second grids comprising a series of holes for receiving a separate one of the projections in the first and second sets of projections. The cleaning grid has an outer perimeter sized to fit within the sidewalls of the lid. The holes in the cleaning grid are sized to snugly receive the projections, such that when the grid is pressed into place or removed it closely scrapes along the projections.

In use, the cleaning grid is pressed against the projections such that the projections extend through the grid. Most preferably the cleaning grid is pushed upward to rest up against or close to the inner surface of the lid. As such, the lid is configured so that the projections can extend through the blade spaces with the cleaning grid in place, against the inside surface of the lid. The snug fit between the projections and the cleaning grid holes are sized so that a strong prying force is required to remove the cleaning grid. After using the food chopper to chop onions, apples, or other food items, the cleaning grid can be removed from the inside of the lid. The removal of the cleaning grid causes it to scrape along the projections, removing bits of food as the cleaning grid is removed.

While the preferred embodiment of the invention has been illustrated and described, as noted above, many changes can be made without departing from the spirit and scope of the invention. Accordingly, the scope of the invention is not limited by the disclosure of the preferred embodiment. Instead, the invention should be determined entirely by reference to the claims that follow.

## Claims

1. A food chopper, comprising:
a blade tray having a first grid of blades defining a first plurality of openings between adjacent blades within the first grid of blades, the first grid of blades of the blade tray defining a plane and an axis perpendicular to the plane;
a stand supporting the blade tray;
a lid attached to the food chopper for pivotal movement with respect to the blade tray, the lid having a first plurality of projections sized and configured to be received within the first grid of blades when the lid is pivoted adjacent the blade tray; and
a reservoir supported by the food chopper and being laterally moveable with respect to the blade tray, along a plane transverse to the axis, between a first position in which the reservoir is beneath the grid of blades to collect food items pushed through the grid of blades, and a second position in which the reservoir is moved laterally outward from the blade tray.

2. The food chopper of claim 1, wherein the reservoir is suspended from the blade tray.

3. The food chopper of claim 2, wherein the stand comprises a plurality of legs.

4. The food chopper of claim 3, wherein the reservoir further comprises a peripheral flange, the reservoir being suspended from the blade tray by the peripheral flange.

5. A food chopper, comprising:
a blade tray having a first grid of blades defining a first plurality of openings between adjacent blades within the first grid of blades, the first grid of blades of the blade tray defining a horizontal plane;
a first leg and a second leg supporting the blade tray, the first leg terminating in a first foot and the second leg terminating in a second foot;
a lid attached to the food chopper for pivotal movement with respect to the blade tray, the lid having a first plurality of projections sized and configured to be received within the first grid of blades when the lid is pivoted adjacent the blade tray; and
a reservoir suspended by the food chopper and being laterally moveable with respect to the blade tray, the reservoir having a bottom positioned above the first foot when the reservoir is suspended by the blade tray, the reservoir being removable from the blade tray, wherein the blade tray is supported by the first leg and the second tray when the reservoir is removed from the blade tray.

6. The food chopper of claim 5, wherein the reservoir further comprises a peripheral flange, the reservoir being suspended from the blade tray by the peripheral flange.

7. The food chopper of claim 1 or claim 5, further comprising a handle attached to the reservoir.

8. The food chopper of claim 2 or claim 5, further comprising a reinforcing frame attached to the blade tray.

9. The food chopper of claim 8, wherein the reinforcing frame is formed from metal.

10. The food chopper of claim 9, wherein the stand comprises a plurality of legs, the plurality of legs being mounted to the reinforcing frame

11. The food chopper of claim 9, wherein the first leg and the second leg are mounted to the reinforcing frame.

12. A food chopper, comprising:
a blade tray having a grid of blades defining a plurality of openings between adjacent blades within the first grid of blades;
a first leg and a second leg supporting the blade tray;
a lid attached to the blade tray for pivotal movement of the lid with respect to the blade tray, the lid having a first plurality of projections sized and configured to be received within the first grid of blades when the lid is pivoted adjacent the blade tray; and
a reservoir suspended by the blade tray and being laterally moveable with respect to the blade tray between a first position in which the reservoir is positioned beneath the grid of blades to collect food items falling through the grid of blades, a second position in which the reservoir is slid laterally outward from the blade tray and the grid of blades while still suspended by the blade tray, and a third position in which the reservoir is removed from the blade tray, wherein the blade tray is supported by the first leg and the second leg in each of the first, second, and third positions.

13. The food chopper of claim 12, wherein the reservoir further comprises a peripheral flange, the reservoir being suspended from the blade tray by the peripheral flange.

14. The food chopper of claim 4 or claim 6 or claim 12, further comprising a ledge attached to the blade tray, the ledge supporting the peripheral flange.

15. The food chopper of claim 14, wherein the ledge is formed by a wire
